# EUROPEAN PATENT SPECIFICATION

(11) **EP 2 574 928 B1**
(45) Date of publication and mention of the grant of the patent: **17.06.2020**
(21) Application number: 12186524.0
(22) Date of filing: 28.09.2012
(51) Int. Cl.: G01N 15/05, G01N 15/04, G01N 35/04, G01N 35/02

(54) **A test analyser comprising a disposable foil punch for immunohematology test elements**
Analysevorrichtung mit einem Einwegfolienlocher für Immunhämatologietestelement
Analyseur de test comprenant un emporte-pièce à feuille jetable pour éléments de test d'immunohématologie

(30) Priority: 30.09.2011 US 201113249747
(43) Date of publication of application: 03.04.2013
(73) Proprietor: ORTHO-CLINICAL DIAGNOSTICS, INC., Raritan, NJ 08869 (US)
(72) Inventor: Lacourt, Michael W., Spencerport, NY 14559 (US)
(74) Representative: Schweizer, Christiane

(56) References cited:
- EP-A2- 0 884 575
- EP-A2- 0 895 088
- WO-A1-97/22882
- WO-A1-2006/094388
- WO-A1-2009/120516
- US-A1- 2004 101 966
- US-A1- 2007 212 264

## Description

### FIELD OF THE INVENTION

The application relates to the field of clinical testing in particular with an immunological test element having at least one test chamber and covered by a pierceable foil layer. Clinical testing includes immunohematology, immunodiagnostic and other clinical testing. The foil layer is defined by at least one portion that permits puncture in order to facilitate access to the contents of the test chamber.

### BACKGROUND OF THE INVENTION

Predispensed reagents, in particular for immunohematology ("IH") testing, are often provided in sealed chambers that are accessed when needed in a testing environment. For instance, BIOVUE™ cassettes and MTS Gel Cards™ utilize a foil seal over the Reaction Chamber to maintain the integrity of the pre-dispensed reagent within each column. Other comparable systems use similar test elements for IH testing. It's possible through mishandling of the card/cassette that the inside of the foil seal can come into contact with the pre-dispensed reagent.

Immunological agglutination reactions are typically used for identifying various kinds of blood types as well as for detecting various kinds of antibodies and antigens in blood samples and other aqueous solutions. In such procedures, a sample of red blood cells is mixed with serum or plasma in either test tubes or microplates, wherein the mixture is incubated and then centrifuged. Various reactions then occur or do not occur depending on, for example, the blood types of the red blood cells or whether certain antibodies are present within the blood sample. These reactions manifest themselves as clumps of cells or as particles with antigens or antibodies on their surfaces, referred to as agglutinates. The failure of any agglutinates to appear indicates no reaction has occurred, while the presence of agglutinates, depending on the size and amount of the clumps formed, indicates the presence of a reaction and the level of concentration of cells and antibodies in the sample and reaction strength.

Many such reactions are included in the slate of reactions run on clinical diagnostic analyzers and other analyzers. A clinical laboratory testing and diagnostic system typically includes a Scheduler, which controls and specifies operations in the analyzer by allocating resources at various time points to ensure the desired tests are carried out in a timely and orderly manner. A system clock determines which of the steps are carried out in various parts of the analyzer. Thus, the position of samples, dispensing of reagents, signal detection and the like by various part of the analyzer are specified relative to the common clock to ensure they march to the same beat. The Scheduler ensures that samples are accepted from an input queue as resources are reserved for the various expected tests relevant to a particular sample. Unless the required resources are available, a sample continues to be in the input queue. Samples are further batched into trays (or slots). In a preferred analyzer, the sample is aspirated and then sub-samples are taken from this aspirated volume for various tests. The operation of the Scheduler together with the types of tests supported by the analyzer provides a reasonably accurate description of exemplary analyzers.

Reagents for various tests are preferably provided in sterile packs. Examples of such packs are BioVue Cassettes and MTS Gel-Cards (a type of gel card), which utilize a foil seal to maintain the integrity of the pre-dispensed reagent within. Further, using very small aliquots of sealed reagents increases the cost and potential bio-hazardous waste while larger quantities of reagents packaged for use in multiple reactions invites cross contamination risk since it is possible through mishandling of the card/cassette that the inside of the foil seal can come into contact with the pre-dispensed reagent. Transfer of the reagent from one well to the next resulting in a false positive response for either a blood type or a screen is a problem that is not addressed well by current systems.

Some components that help run a clinical analyzer as directed and expected by the Scheduler include stepper motors. Control of stepper motors, and hence probe and mechanism movement, is accomplished by techniques well known in the art such as those described in U.S. Patent 5,646,049.

As described, for example, in U.S. Pat. No. 5,512,432 to LaPierre et al., and rather than using microplates or test tubes, another form of agglutination test method has been developed and successfully commercialized. According to this method, gel or glass bead microparticles are contained within a small column, referred to as a microcolumn or a microtube. A reagent, such as anti-A, is dispensed in a diluent in the microcolumn and test red blood cells are placed in the reaction chamber above the column. The column, which is typically one of a plurality of columns formed in a transparent card or cassette, is then centrifuged. The centrifugation accelerates the reaction, if any, between the red blood cells and the reagent, and also urges any cells toward the bottom of the column. In the meantime, the glass beads or the gel material acts as a filter, and resists or impedes downward movement of the particles in the column. As a result, the nature and distribution of the particles in the micro-column provides a visual indication of whether any agglutination reaction has occurred, and if such a reaction has occurred, the strength of the reaction based on the relative position of the agglutinates in the column. If no agglutination reaction has occurred, then all or virtually all of the red blood cells in the micro-tube will pass downward during the centrifugation procedure, to the bottom of the column in the form of a pellet. Conversely and if there is a strong reaction between the reagent and the red blood cells, then virtually all of the red blood cells will agglutinate, and large groupings will form at the top of the microtube above the gel or bead matrix in that the matrix is sized not to let these clumps pass through. Reactions falling between these latter two extremes are possible in which some but not all of the red blood cells will have agglutinated. The percentage of red blood cells that agglutinate and the size of the agglutinated particles each have a relationship with the strength of the reaction. Following the centrifugation process and after all processing steps have been completed, the microtube is visually examined by either a human operator or by machine vision and the reaction between the red blood cells and the reagent is then classified. The reaction is classified as being either positive or negative, and if positive, the reaction is further classified into one of four classes depending on the strength of the reaction.

Gel cards and/or bead cassettes are test elements that employ a plurality of microtubes for purposes of creating agglutination reactions as described above for purposes of blood grouping, blood typing, antigen or antibody detection and other related applications and uses. These test elements commonly include a planar substrate that supports a plurality of transparent columns or microtubes, each of the columns containing a quantity of an inert material, such as a gel material or a plurality of glass beads, respectively, that is coated with an antigen or antibody or material or is provided with a carrier-bound antibody or antigen, each of the foregoing being provided by the manufacturer. A pierceable wrap completes the assembly of the test element, the wrap, which may be, for example, in the form of an adhesively or otherwise-attached foil wrap, covering the top side of the test element, in order to cover the contents of each column. Once pierced, aliquots of patient sample and possibly reagents (e.g., if reagents are not first added by the manufacturer or additional reagents, depending on the test) can be added to the columns, either manually or using automated apparatus. The test element thus containing patient sample (e.g., red blood cells and sera) is then incubated and following incubation, the test element is spun down by centrifugation, as noted above, in order to accelerate an agglutination reaction that can be graded either based on the position of agglutinates within each transparent column of the test element or cassette or due to a lack of agglutination based on the cells settling at the bottom of the test column.

As noted, each of these test elements typically include a foil wrap disposed at the top of the card or cassette covering the columns wherein the wrap can be pierced prior to the dispensing of the patient sample, reagents, or other material into at least one microtube of the test element. The foil wrap forms a seal relative to the contents of the columns to prevent contamination and also prevents the contents of the columns from drying out or degrading.

A number of automated or semi-automated apparatus, such as those manufactured by Ortho-Clinical Diagnostics, Inc., DiaMed A.G., and Grifols, are known that utilize plurality of gel cards or bead cassettes, such as those manufactured and sold by Micro Typing Systems™, Inc., DiaMed™ A.G., and Bio-Rad™, among others. Typically, these apparatus employ separate assemblies to accomplish the piercing function. In one known version, a pipette assembly probe is used to directly puncture the foil wrap. Using the metering probe for puncture wherein contact is made with the contents of the test columns means that this probe must undergo a separate washing operation following the piercing step before use thereof can be resumed to avoid contamination. In addition to potential contamination issues, there are also related issues dealing with spillage as well as fluidic carryover. In addition, washing operations add levels of complexity to the size and manufacture of the apparatus as well as hinder potential throughput time. In another known apparatus, AUTOVUE™, a piercing assembly is provided having a plurality of dedicated punches (gang punch) for puncturing the seals for each of the test chambers of a test element. This dedicated apparatus also adds a level of complexity, including an increase to the size of the overall footprint of the apparatus. The latter assembly also requires washing operations of the punches themselves, albeit on a limited basis, during re-use thereof and includes a large number of punches to accommodate the needs of many different tests.

Thus, the extent systems and supplies require either a tolerance for false positive results, which may result in retesting or erroneous tests, or packaging of reagents in single use packs, which results in increased generation of waste as well as inefficiency.

EP0895088A2 discloses a blood analysis system or instrument, generally, including an incubator station, a sample and a reagent holding station, a pipette assembly, a centrifuge, an analysis station and a transport assembly.

WO2009/120516 A1 discloses an immunodiagnostic test element including asupport member, at least one test column containing a test material, and a wrap, such as an adhesively-attached foil wrap, covering the top of the at least one test element.

US2007/0212264 A1 discloses an apparatus for penetrating a cover over a multi-well smaple plate containing at least one individual sample well, including a cutting head, a cutter extending from the cutting head, and a robot.

WO97/22882 A1 discloses an apparatus and method for processing biochemical samples, and in particular an apparatus for discharging pipettes from a dispensing device and a method of dispensing aliquots of viscous liquid during a biochemical processing operation.

The present invention relates to a method for reducing cross contamination in an immunodiagnostic testing apparatus, the method comprising the steps of:
estimating a time for using a sealed element (235) having a puncturable seal (305) in the performance of a specified test, using software;
determining whether a previous use of a current disposable punch (510) is compatible with the specified test based on stored data specifying past usage of the current disposable punch (510), wherein the disposable punch is determined as being not compatible if it has been used with a test or reagent that will introduce unacceptable risk of cross-contamination;
if the previous use of the current disposable punch (510) is compatible with the specified test:
   aligning the current disposable punch (510) with the sealed element (235), wherein the current disposable punch is not used to aspirate fluids;
   punching an opening in the puncturable seal (305) on the sealed element (235) with the current disposable punch to enable a fluid-carrying tip of the immunodiagnostic testing apparatus to aspirate fluids therefrom or to dispense fluids therein without touching the puncturable seal (305); and
   if the previous use of the current disposable punch (510) is not compatible with the specified test,
   evaluating whether an alternative disposable punch from an array of disposable punches is compatible with the specified test and using the alternative disposable punch to punch the opening in the puncturable seal (305) if the alternative disposable punch is compatible with the specified test.

The present invention further relates to an immunodiagnostic test analyzer comprising:
a disposable punch (510) in a punch nest (515);
at least one set of elements (235), each element sealed with a puncturable seal (305), for holding at least one member of the group consisting of a reagent, a sample and a reaction mix;
a fluid-carrying tip;
a means for compatibility testing for determining if a current or an alternative disposable punch is compatible with a specified element from the set of elements,
   wherein the disposable punch is determined as being not compatible if it has been used with a test or reagent that will introduce unacceptable risk of cross-contamination;
a means for aligning the disposable punch (510) with the specified element if the current disposable punch (510) is compatible with the specified test, or for aligning an alternative disposable punch from an array of disposable punches with the specified element if the current disposable punch (510) is not compatible with the specified test and the alternative disposable punch is compatible with the specified test; and
an actuator moveable with respect to the current or to the alternative disposable punch so as to align with the current or with the alternative disposable punch, the actuator configured to make the current or the alternative disposable punch an opening in the puncturable seal (305), which is sufficiently large to enable the fluid-carrying tip to aspirate or dispense fluids without touching the puncturable seal (305).

Specific embodiments thereof are also disclosed herein.

### SUMMARY OF THE INVENTION

Aspects of the invention are disclosed in the appended independent claims. Optional, but advantageous features are disclosed in the appended dependent claims.

For each test intended to be performed on a clinical analyzer, there would be available one or more disposable punches compatible with the reagents to be used in tests implemented on the clinical analyzer. Preferably such a clinical analyzer is an immunohematology analyzer, but other uses, such as in a immunodiagnostic analyzer are also within the scope of this disclosure. By way of an example duration, all of the disposable punches may be replaced once every six months unless an earlier replacement is warranted. According to one aspect, an immunodiagnostic test analyzer has a disposable punch in a repositionable punch holder, at least one set of sealed elements, each sealed element sealed with a puncturable seal, for holding at least one member of the group consisting of a reagent, a sample and a reaction mix. Preferably, the puncturable seal is a foil seal. Further, the foil seal may be pre-stressed, although this is not a requirement. Each element may comprise a substrate, at least one test column supported by said substrate, each said test column containing a test material, and a wrap adhesively or otherwise-attached wrap covering the top of said at least one element to form the sealed element. A disposable punch is defined to have any suitable shape for punching an opening in an element provided it is not used for aspirating fluids into or out of the element. It is noteworthy that through even chance mishandling of the card/cassette the inside of the foil seal can come into contact with the pre-dispensed reagent or a tip. Then, transfer of the reagent from one well to the next can result in a false positive response for either a blood type or a screen in an immunodiagnostic analyzer or immunohematology testing.

According to one aspect, a method for reducing cross contamination in an immunodiagnostic testing apparatus comprises multiple steps. In one such step, a time, say T, for using an element having a puncturable seal in the performance of a specified test is estimated, typically by a scheduler. A disposable punch may take any suitable shape, but it is not used for aspirating fluids from one element to another. The disposable punch may be held singly or, more preferably, in an array or collection of disposable punches. The prior use of each disposable punch is tracked by the system to ensure its future use does not compromise testing by introducing the possibility of unacceptable cross-contamination or otherwise compromising test results. To this end it is expected that replacing the disposable punches is desirable if one or more of the conditions selected from exceeding a specified number of uses of a punch, exceeding a time duration for which a punch is expected to be in use, and an increase in variability of control test results above a threshold is met. A disposable punch is used to punch an opening in a seal on the element to enable a fluid carrying tip to aspirate fluids therefrom or to dispense fluids therein. An element may be a particular chamber in an MTS Gel-Card, a reagent holding vessel, a patient sample holding tube, bead cassette, a microtube, a test tube and the like.

If a disposable punch could be used for more than one assay then it would reduce the number of punches for all of the assays on the system. The method for reducing cross contamination in an immunodiagnostic testing apparatus includes determining whether a previous use of the disposable punch provisionally assigned/available for a specified test is compatible with the specified test. Such a disposable punch is marked as the 'current' disposable punch. In a preferred embodiment the 'current' disposable punch is associated with an actuator. If the current disposable punch is not compatible, i.e., it has been used with a test or reagent that will introduce unacceptable risk of cross-contamination, then another disposable punch is made the 'current' disposable punch and evaluated in a like manner. It should be noted that there may be multiple actuators in other implementations. In a preferred embodiment, one or a few actuators operate a greater number of punches. Further, while there are multiple punches, the number of punches is less than the distinct type of elements that need to be accessed with the help of a punch. The use of multiple punches allows for more efficient use of punches with replacement of punches becoming relatively infrequent without the requirement that each type of element have its own dedicated punch. Returning to the exemplary method, if there are no disposable punches that pass the evaluation, then a new disposable punch is loaded. This may require scheduling and/or executing a routine to load a new punch. Additionally, a disposable punch may be replaced by a new disposable punch for reasons other than compatibility such as time for which it has been in use, or the number of seals it has been used to punch. When a new punch is introduced, its use with different types of elements is tracked to ensure it is only used with other compatible elements.

A preferred immunohematology analyzer includes means for aligning the specified element, which may be a chamber a cassettes with a disposable punch in the repositionable punch holder. Means for aligning are implemented by programming a processor to determine the suitable punch for the specified element followed by aligning the punch in question with an actuator and the element such that upon command the actuator moves the punch to pierce the seal on the element. Means for aligning generate instructions for moving the disposable punch or the specified element adjacent to each other prior to the time for the next use of the specified element. This ensures that at the time for the next use, the disposable punch is positioned correctly relative to the specified element for operating the disposable punch, if needed. In a preferred embodiment, the element is moved to a different location for aspiration of fluids from it or for dispensing of fluids into it. Preferably, a fluid-carrying tip is selected from a disposable metering tip, a washable metering tip, and a reusable metering tip.

According to one aspect there is provided a linear path suitable for the repositionable punch holder to move a disposable punch along it. In another aspect, in another preferred embodiment, the repositionable punch holder may move the disposable punch along a closed path, an exemplary closed path being a circular path.

In the analyzer there is provided a means for compatibility testing to determine if the disposable punch is compatible with the next planned use of the disposable punch. Means for compatibility testing are implemented by programming a processor to determine whether the disposable punch in question, the current disposable punch, is compatible with the element in need of having its seal pierced, and if there is no other compatible disposable punch available, then the disposable punch is replaced with a new punch. Further, the number of times the disposable punch has been used is evaluated to decide whether to replace the disposable punch. In an embodiment, a lookup table is used to identify a disposable punch corresponding to a test or a reagent. Then, the means for compatibility testing further determine if a new disposable punch is needed-such as due to the time for which the disposable punch has been in use, or the number of times the disposable punch has been used. Other possible criteria include incidence of suspected cross-contamination. When disposable punches are replaced, in the interest of efficiency, preferably all or most of the punches in the punch nest are replaced.

In another embodiment, an immunodiagnostic testing apparatus includes an incubator or a card/cassette preparation station holding a cassette or a card with a plurality of chambers and at least one disposable punch held in a manipulable configuration of disposable punches; software for estimating or assigning a time for using a particular element sealed with a wrap in a test to be performed by the immunodiagnostic testing apparatus; a means for aligning the at least one disposable punch element with the particular element; and an actuator for punching a sufficiently large opening using at least one disposable punch in the wrap on the particular element to enable a fluid-carrying tip to aspirate or dispense fluids without touching the wrap.

Without loss of generality, in the immunodiagnostic testing apparatus the fluid-carrying tip is selected from a disposable metering tip, a washable metering tip, and a reusable metering tip. The wrap may be a foil seal. In an embodiment, the foil seal may even be pre-stressed.

The analyzer uses an immunodiagnostic test element comprising a substrate, at least one test column supported by said substrate, each said test column containing a test material, and a wrap adhesively or otherwise-attached wrap covering the top of said at least one test element, such as, for example, an adhesively-attached foil wrap wherein said foil wrap includes a weakened portion directly above each said at least one test column, each said weakened portion being formed by pre-stressing said portion, but not to the point of puncturing the foil wrap. Further details for such elements are found in US Patent Publication No. 20090246877.

By providing at least one pre-stressed portion, the foil wrap is drastically weakened locally, thereby enabling each pre-stressed portion to be easily punctured, for example, using a disposable fluid aspirating dispensing member, such as a metering tip. Moreover, the pre-stressed portions are also locally deformed and assume a bowl-like concave shape. Alternatively, the pre-stressing can be performed on the wrap prior to covering of the test element with the wrap.

The pre-stressing of the foil wrap results in local deformation of the foil wrap, creating an indentation that is inwardly curved, forming a substantially bowl-like appearance. This portion can then be easily punctured in a distinct operation.

These and other features and advantages will become readily apparent from the following Detailed Description, which should be read in conjunction with the accompanying drawings.

### BRIEF DESCRIPTION OF THE DRAWINGS

FIG. 1 Shows an exemplary listing of reagents in a table showing compatible and incompatible reagents for the use of a common disposable punch.
FIG. 2 shows part of an immunodiagnostic testing apparatus illustrating disposable punches arranged in a circular pattern for punching seals on elements in linear holders below.
FIG. 3 shows is a simplified view of an MTS GelCard;
FIG. 4 shows a column in an MTS GelCard aligned with a disposable punch;
FIG. 5 shows a column in an MTS GelCard aligned with a disposable punch and a linear actuator;
FIG. 6 depicts an implementation of the means for compatibility testing and the means for alignment in the context of the operation of an immunodiagnostic analyzer with disposable punches;
FIG. 7 depicts a different aspect of an implementation of means for compatibility testing; and
FIG. 8 depicts the operation of means for compatibility testing and means for alignment in the context of the operation of an immunodiagnostic analyzer with disposable punches to effect alignment of the disposable punch with an actuator and the sealed element.
FIG. 9 depicts the exemplary operation of immunodiagnostic analyzer in allocating resources and scheduling events involving the use of disposable punches for accessing a sealed element.
FIG. 10 depicts another exemplary logic flow for the operation of immunodiagnostic analyzer with scheduling of events involving the use of disposable punches for accessing a sealed element.

### DETAILED DESCRIPTION

The following discussion relates to certain embodiments of an immunodiagnostic analyzer (also referred to as an immunohematology analyzer depending on the context) using disposable punches and sealed elements pierced thereby. In a preferred embodiment, the analyzer uses a gel card or bead cassette. It will be readily apparent to those of skill in the field that the inventive concepts described herein also relate to literally any other form of immunodiagnostic analyzers that include at least one test chamber and a wrap/seal, such as, for example, a foil wrap, which covers the at least one test chamber, which is also referred to as an element or sealed element. In addition, certain terms are used throughout this discussion in an effort to provide a frame of reference with regard to the accompanying drawings. These terms should not be regarded as limiting, except where specifically indicated.

Typically prior to use of a reaction chamber, the foil must be either physically removed or perforated to create an opening that can be accessed by the pipetter. For manual testing, a technician will peel the foil off the reaction chambers that are needed to run a test. Automated Immunohematology systems typically gain access to the reaction chambers by piercing the foil with either the pipetter probe itself or by a sharp metal punch. In the case of AutoVue™, a series of punches are arranged in gangs for opening specific card types. Each punch is dedicated to a specific Reaction Chamber type to mitigate carry-over from one well to the next. Over time these punches become dirty or contaminated and must be cleaned by service person. In the case of ProVue™, the pipetter is cut at an angle on the dispense end and the resulting sharp point is used to perforate the foil before each metering event. This approach requires that the outside of the probe be washed after every fluid dispense into a reaction chamber to avoid carry-over to the next reaction chamber.

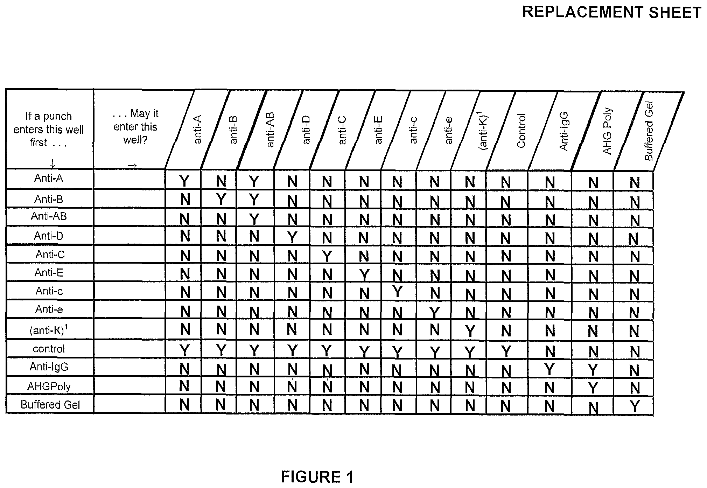

For VISION™, the design uses a disposable tip pipetter or a washable probe system. For each fluid dispense into a reaction cell, the foil seal has to be opened in such a way that when the tip enters a reaction cell, there is no contact with foil seal. A large opening in the foil above the test column needs to be created to allow access by the disposable tip. The AutoVue™ "gang punch" approach is large and requires cleaning by service every 6 months. A new smaller foil punch mechanism that addresses carry-over is desirable as a result. It is also desired that the foil opening mechanism open only those test columns scheduled for use and can be serviced by the operator instead of a service person. The prevention of touching the seal is especially important when the same tip is used to pipette fluids/suspensions such as patient red blood cells into multiple column types such as A, B, and D. Table in Figure 1 for ProVue™ indicates there are approximate 13 pre-dispensed reagents that if carried over could affect the result of the next column fluid is dispensed into. AutoVue™ has 20 such pre-dispensed reagents.

The disclosed embodiment uses disposable foil punches that can be replaced by the operator on a periodic basis. The number of such punches required would be dictated by the number of different column types run on the instrument. The Piercing Punch would preferably be an injection molded plastic part, but other materials and manufacturing methods can be use. Each punch can preferably be replaced by an operator on a periodic basis. Approximately 20 punches would be needed to avoid any Cell to Cell Carry-over for most applications.

Figure 1 provides an exemplary listing of reagents in a table showing which reagent/test combinations are compatible with the use of a common disposable punch. For purposes of background, not all cross contamination may result in compromising tests to such an extent that the results are unacceptably suspect or may be compromised. For instance, carryover of sample from one element to another is not acceptable unless mixing of different samples is intended. On the other hand, as shown in Figure 1, reagent carryover may not affect the results for certain combinations.

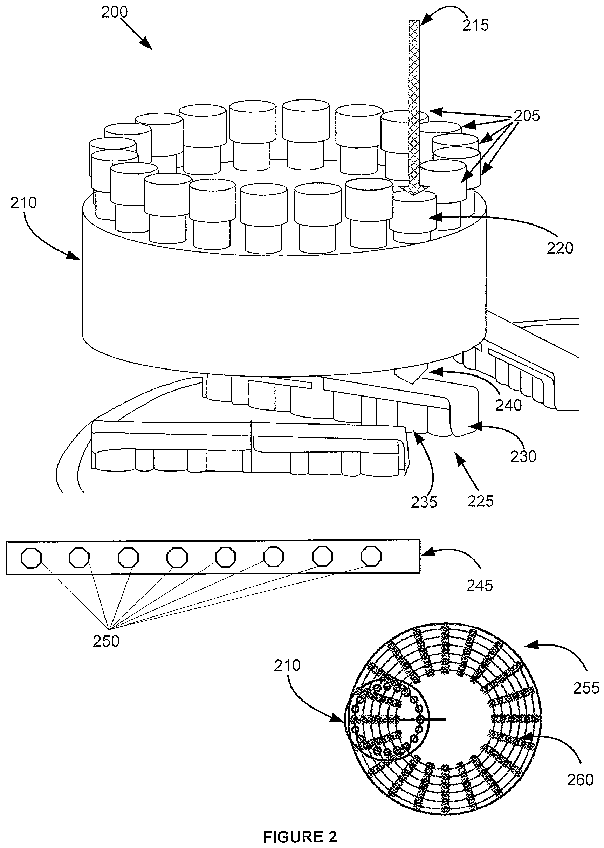

Figure 2 illustrates an exemplary implementation of multiple punches held in a circular configuration where each punch is rotated into a position for piercing the foil seal on a card or cassette. The cards, containing elements with seals to be pierced, are staged below the punch assembly in a buffer that rotates to software align the correct column with the correct punch. FIG. 2 illustrates part of such an exemplary immunodiagnostic analyzer 200 showing disposable punches 205 placed in a circular punch holder 210. Also shown is the operation of activator 215 on a particular disposable punch 220. Below the punch holder 210 is element holder 225 with a seal 230 covering a plurality of elements of which element 235 is below the lower end 240 of disposable punch 220 being pushed by operation of activator 215. The alignment of operation of activator 215, disposable punch 220 and element 235 in this exemplary example is accomplished by means for aligning. The choice of a particular disposable punch, such as disposable punch 235, is also subject to means for compatibility testing. Also shown in Figure 2 is a linear Punch Nest 245 for holding disposable punches 250. Such alternative geometries and designs may be implemented instead of Punch Nest 210 shown as part of instrument 200. The illustrated Punch Nest 245 has a linear configuration where the punches can be positioned over a stationary card/cassette/sample/element. The actuator preferably moves on a separate stage with alignment and positioning under software control. The linear arrangement can be compared to the circular arrangement 255 corresponding to that of punch nest 210 of instrument 200. In the circular arrangement, the smaller arrangement is the punch nest positioned over the larger arrangement holding the card/cassette/sample/element 260. Such variations in implementing the teachings are included within the scope of the disclosure.

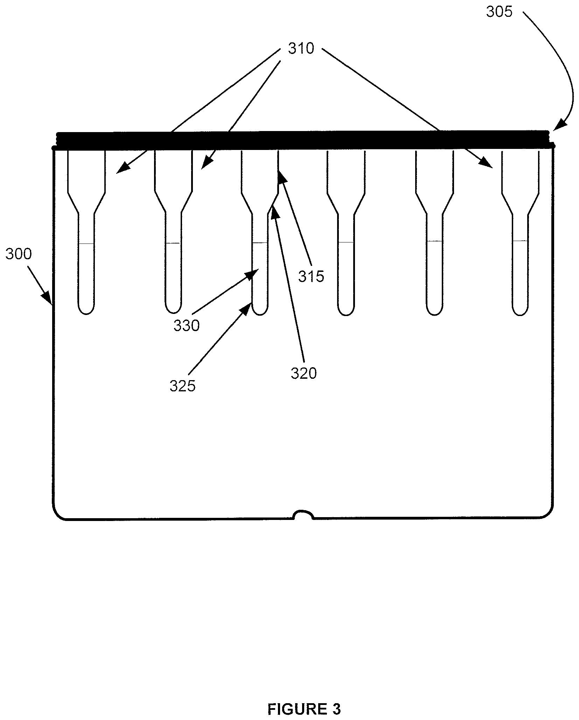

Figure 3 shows a gelcard 300 having a seal 305 and chambers/columns/microtubes 310. Such a gelcard 300 could be used in manner illustrated for element holder 225 in Figure 2. A gel card, or a bead cassette, commonly includes a support member, such as a planar substrate supporting a plurality of microtubes or test columns. An exemplary microtube 310 is made from a transparent material and is further defined by an upper portion 315 having an open top opening, an inwardly tapering transitional portion 320 and a lower portion 325. A predetermined quantity of an inert material 330 is contained within the lower portion 325 of each test column 310, as typically provided by a manufacturer. The inert material 330 is a gel material, such as Sephacryl™ or other suitable material, while in the instance of the bead cassette, the inert material is defined by a matrix of glass or other beads. The inert material typically comprises a plurality of particles having a diameter of between about 10 and 100 microns.

Further, the inert material is further coated with an antibody or provided with a carrier-bound antigen or antibody, such as anti-A, also typically provided by the manufacturer. A pierceable foil wrap 305 provided at the top side of each test element 310 covers that seals the microtubes in order to protect the contents and also to prevent dehydration or degrading thereof.

The foregoing immunodiagnostic test elements or element holder 225 can be used in an automated testing apparatus 200, such as that shown in FIG. 2. In brief, the testing apparatus 200 retains a number of components including a reagent and sample supply, an incubator station, a centrifuge, an analysis station, and a drawer assembly. More particularly, the sample and reagent supply of this apparatus 200 includes a gel card 225, Figure 2, 300, Figure 3, 400, Figure 4.

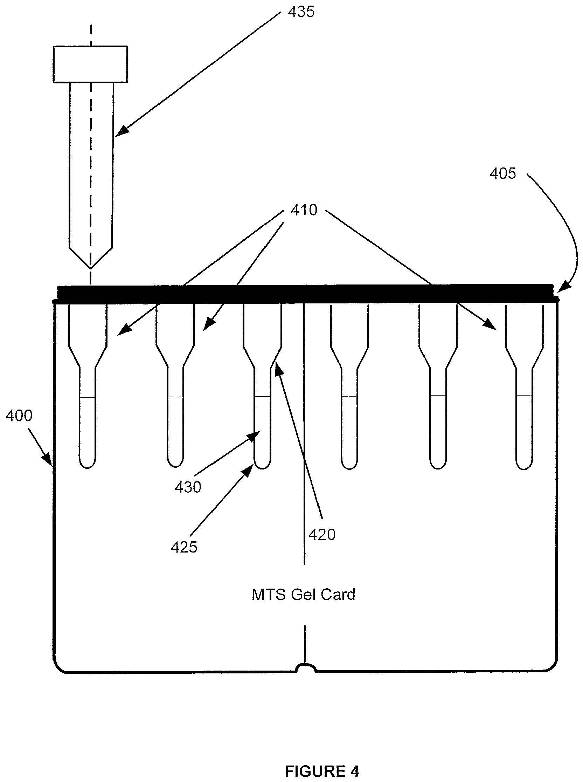

In the testing apparatus 200 shown, for example, a plurality of test elements 310, such as those previously described according to either FIG. 3, are initially read by a bar code reader (not shown). Assuming the read is successful, the element holder 225 is loaded using the transport assembly . Actuator 435, FIG. 4, is deployed to open the seal on a desired element 410 in element holder 225. The pipette of a pipette assembly is used to aspirate sample while actuator 435, FIG. 4, is used to puncture each of the microtubes. Once the puncturing step has been completed, the pipette can then be used to dispense a predetermined quantity of patient sample (and possibly additional reagents) from the sample and reagent supply into each of the test columns 410, FIG. 4, wherein the mixture can be suitably incubated.

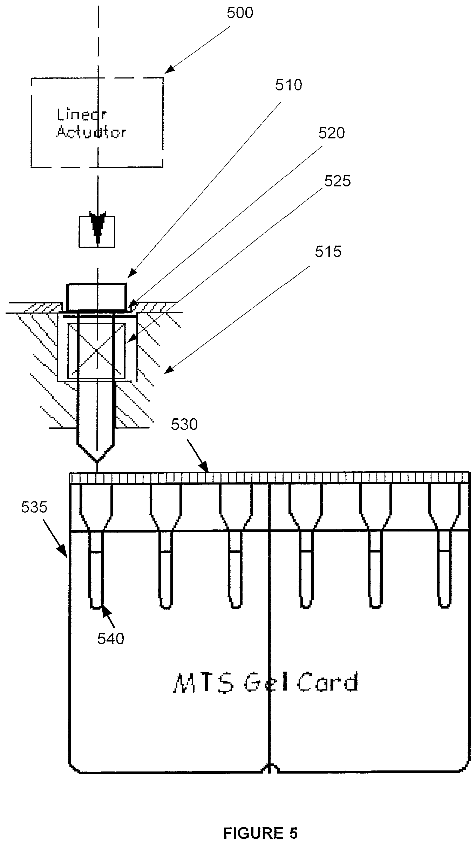

Figure 5 shows further details such as the linear actuator for making the disposable punch puncture the seal. Linear actuator 500 acts on foil punch 510 as depicted, which disposable punch 510 is seated in a Punch Nest 515 with Washer 520 providing for shock absorption and spring retention. Spring 525 is compressed by the action of linear actuator 500 when punching an opening in seal 530 in element 540 in Gel Card 535 with the disposable punch 510 rebounding to its position due to spring 525 after the punching operation.

Following incubation, for carrying out an agglutination reaction, the element holder 225, 300, 400 is removed from the incubator and then spun down, thereby accelerating an agglutination reaction as red blood cells are clumped together in the presence of coated reagents. The plurality of beads disposed in each element/column 310 includes particles having diameters ranging between about 10 and 100 microns, providing a matrix to let the red blood cells, but not the heavier formed agglutinates to pass through by filtering. The resulting reaction can be imaged within the analysis station (not shown) of the immunodiagnostic analyzer 200 by the illumination assembly and imaging subsystem. Machine vision for grading of the reaction may provide automated data generation. Additional details are provided in the commonly-assigned U.S. Pat. No. 5,578,269 to Yaremko et al..

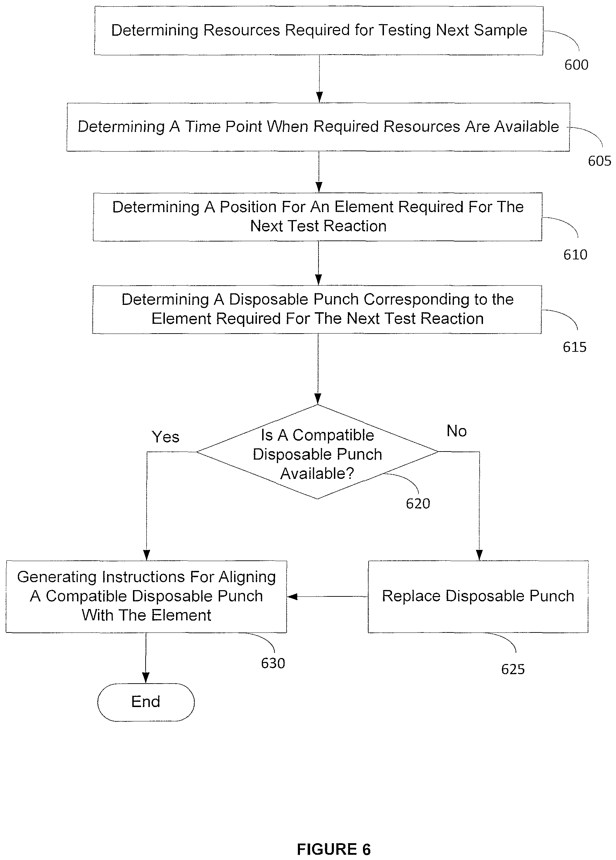

In a typical analyzer, as shown in Figure 6, during step 600 the scheduler determines the resources required for testing the next sample being considered by the scheduler. The scheduler, as shown, during step 605 determines the time point when the required resources will be available. The scheduler directly or by invoking a routine determines the position of an element required for the test being considered by the scheduler, as is depicted by step 610. A suitable disposable punch from a collection of disposable punches is determined during step 615. This determination is preferably made with the aid of a lookup table indexed by either the type of sealed element or the type of test to be carried out. A determination of whether the disposable punch so identified to punch an opening in the element required for the test is compatible with the element is made during steps 615 through 625. During step 615 a lookup table is used to determine a suitable disposable punch for the particular element or the test to be carried. A lookup table is useful, for instance when there are many disposable punches in the punch nest and each is compatible, based on cross contamination considerations, with a few reagents/tests. Then instead of maintaining a large data structure like the table in Figure 1, it is advantageous to exploit the sparseness of the data structure by using a lookup table. This may be done based on the data such as the illustrative data provided in Figure 1 to generate a mapping between a test/reagent/element and the corresponding disposable punch position in the punch nest to form the lookup table. If no compatible disposable punch is available control flows to step 620, in accordance with which a disposable punch is added to an empty slot in the punch nest to provide a punch compatible with the element required for the test. Then control flows from step 620 to step 625, during which instructions for aligning a compatible disposable punch with the element required for the test are generated. Control can flow directly to step 625 from step 615 if the disposable punch is determined to be compatible with the element during step 615. Following step 625 the illustrative logic of Figure 6 ends.

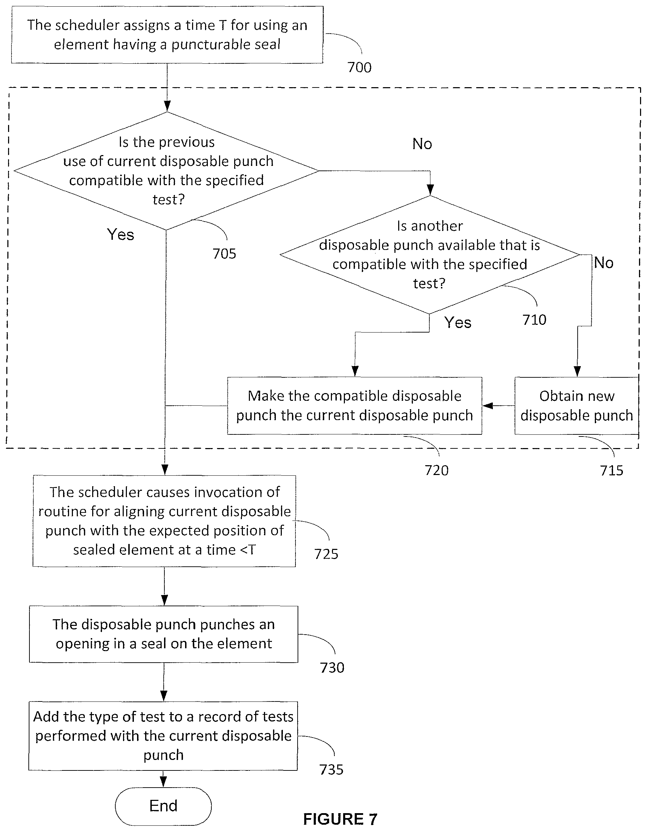

Figure 7 provides a more detailed view of the operation of an immunodiagnostic analyzer with disposable punches. During step 700 the scheduler assigns a time 'T' for using an element having a puncturable seal-that is an element requiring the use of the disposable punch. Control flows to decision step 705, during which compatibility of the disposable punch, preferably initially identified using a lookup table, with the specified test or element is evaluated. If incompatibility is detected, control flows to decision step 710, during which a determination is made as to whether another disposable punch, for instance in punch nest 515, Figure 5, that is compatible with the element in question is available. This step can also benefit from data structures related to a lookup table in that if multiple punches are compatible, based on cross-contamination considerations, with an element/test/reagent then such disposable punches be listed in a chain or tree that can be systematically traversed. A variation that instead examines an alternative element that is compatible with the disposable punch is possible in some instances and is intended to be covered by the step 710. If not compatible disposable punches are available, then control flows to step 715, during which a new punch is obtained, preferably by loading it in punch nest 515, Figure 5. It should be noted that the described means for compatibility testing broadly comprise an implementation of steps 705 through 710, and more preferably also including step 715 and step 720, by way of programming an exemplary central processing unit of the immunodiagnostic analyzer to direct other mechanical and sensory parts of the analyzer to perform them based on the stored data about past usage of the current disposable punch. As is well known to one having ordinary skill in the art, such programming, for instance , with the aid of programming tools such as assembly languages, machine languages, JAVA, C, or variations thereof, and other higher languages coverts a general purpose central processing unit into a customized machine with a defined performance for controlling the analyzer. Upon detecting a usable and compatible disposable punch, it is made the current disposable punch for the logic to flow to step 725. If the current disposable punch is determined to be compatible during step 705, then control directly flows to step 725. During step 725, the scheduler invokes routine(s) for aligning the current disposable punch to be operational with the expected position of the sealed element at time' T'. This alignment may be immediately before time 'T' or well before the appointed time. The operations during step 725, by way of programming an exemplary central processing unit of the immunodiagnostic analyzer to direct other mechanical and sensory parts of the analyzer to perform them based on the stored position data and feedback controls are included in the means for aligning. Control then flows from step 725 to step 730, during which an opening is made in the seal on the element. In some embodiment, the disposable punch may merely be reopening an opening or more securely opening a previously opened seal. Control flows to step 735 from step 730. During step 735 the type of element whose seal was opened by the disposable punch, and the number of uses made of the punch, and other data relevant to determining whether the disposable punch needs to be replaced based on frequency of use or the type of use (see exemplary compatibility table in Figure 1) are updated and recorded.

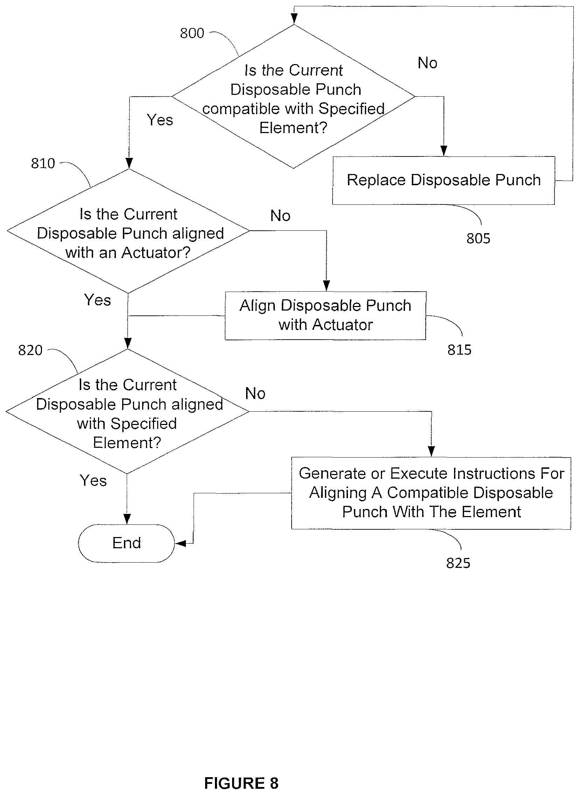

Figure 8 provides further exemplary details for the compatibility testing, including means for compatibility testing and means for aligning, which are implementable by way of programming an exemplary central processing unit of the immunodiagnostic analyzer to direct other mechanical and sensory parts of the analyzer to perform them based on the stored data about past usage of the current disposable punch. During step 800 it is determined whether the current disposable punch is compatible with the specified element. If the disposable punch is compatible, then control directly flows to step 810. Else, control flows to step 805 during which the current disposable punch is replaced by another disposable punch that becomes the current disposable punch. The replacement may be by way of an entirely new punch being introduced into the Punch Nest 515, Figure 5, or by examining another punch already loaded in Punch Nest 515 for compatibility. As previously described, such identification of disposable punches in Punch Nest 515 is readily made using data structures and constructs like lookup tables, trees and chains. Once a new disposable punch has been identified, control flows back to step 800 from step 805. This loop ensures a compatible disposable punch is in place before control flows to step 810 to ensure means for compatibility testing results in a compatible disposable punch. If no compatible disposable punch is possible, then during step 805 an error message is generated to indicate as much (this detail is not illustrated expressly in Figure 8). During step 810 a determination is made as to whether the Current Disposable Punch is aligned with the actuator, as is expected from means for aligning. If not then control flows to step 815 during which such alignment is carried out. In alternative exemplary embodiments, an actuator, linear or of another type, may be prealigned with a current disposable punch. Control flows to step 820 upon satisfactory alignment of the current disposable punch with the actuator. During step 820 a determination is made as to whether the Current Disposable Punch is aligned with the Specified Element, the element whose seal is to be opened, as is expected in another aspect of the means for aligning. If not then control flows to step 825 during which such alignment is carried out or instructions generated or placed into an execution for execution on the exemplary central processing unit at the appropriate time. Upon successful alignment of the Current Disposable Punch with the Specified Element control flows from steps 820 or 825 and this part of the logic terminates.

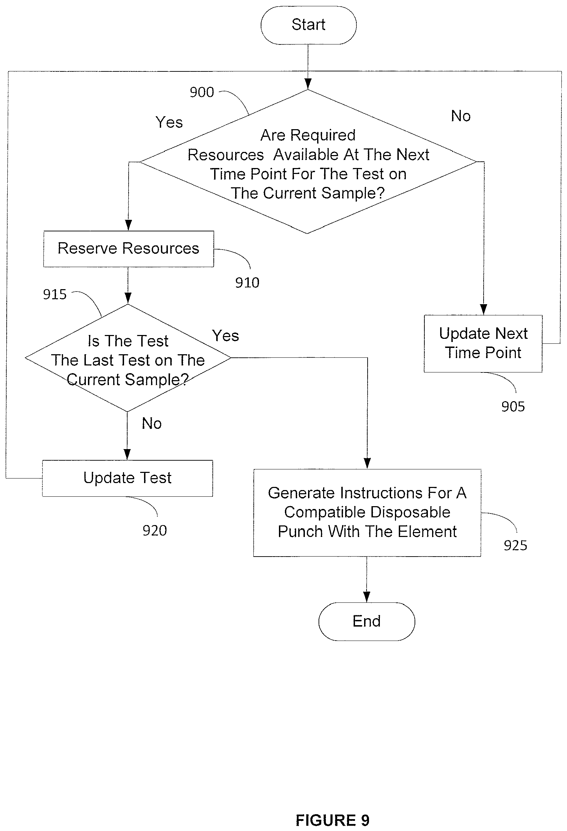

Figure 9 provides another exemplary aspect of the use of disposable punches in an immunodiagnostic analyzer. During step 900 a determination is made as to whether required resources are available at the time for testing the current sample, the current sample typically being the sample being evaluated by the scheduler. If the resources are not available, control flows to step 905, during which the time for testing is advanced and control flows back to step 900. In this manner a suitable time for testing of the current sample is identified. Alternative exemplary embodiments may decide whether resources are available depending on whether the sample is a STAT sample, in which case it is prioritized over non-STAT samples. If resources are determined to be available during step 900, control flows to step 910. During step 910 resources are reserved and the control flows to step 915. During step 915 a determination is made as to whether the test is the last test on the current sample. This step is useful when aspirating samples from a sealed sample since it typically is preferable to provide resources to complete all testing on the sample. If the test is not the last test, control flows from step 915 to 920 to update information for another test. Control then flows to step 900 to evaluate the resource and scheduling needs of the additional test identified in step 920 along with the use of disposable punches. If the test is the last test, with the possibility that sample may be dispensed for more than one test, control flows to step 925, during which instructions for means for compatibility testing are implemented to ensure a compatible disposable punch is deployed. Many of the details for compatibility testing have been discussed above. The exemplary logic then terminates.

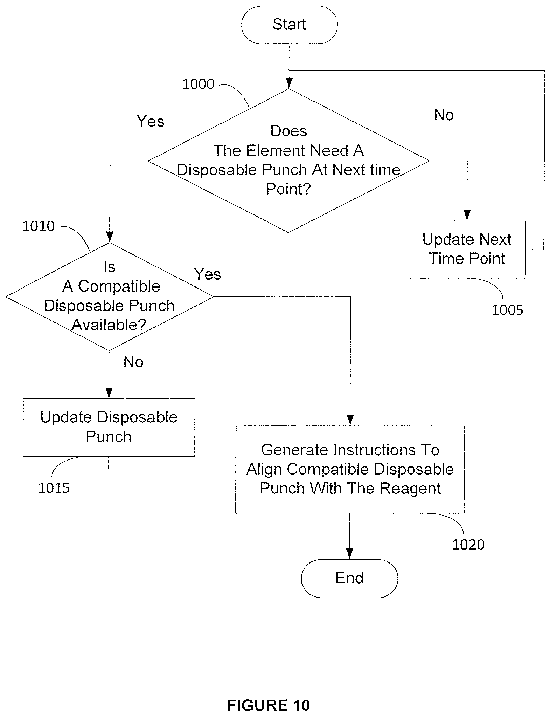

In another aspect, as shown in the exemplary logic of Figure 10 for an exemplary embodiment, during step 1000 whether an element requires use of a disposable punch at the next time point is determined. If there is no need, control flows to step 1005, during which the next time point is updated and control returns to step 1000. In this manner, time points at which disposable punch is needed are identified. Upon identifying such a time point, control flows to step 1010 during which means for compatibility testing assist in determining if a compatible disposable punch is available. Compatibility testing details have been discussed previously, in particular, in the context of Figures 6 through 8. If such a punch is available, control flows to step 1020 during which means for aligning are employed to generate instructions for aligning the punch with the reagent and the like. Else, in the absence of such a punch, control flows to step 1015 during which a compatible punch is identified, for instance as described previously, and control flows to step 1020 described above. Following step 1020 the logic terminates.

It will be understood that numerous variations and modifications are possible in this disclosure.

## Claims

1. A method for reducing cross contamination in an immunodiagnostic testing apparatus, the method comprising the steps of:
estimating a time for using a sealed element (235) having a puncturable seal (305) in the performance of a specified test, using software;
determining whether a previous use of a current disposable punch (510) is compatible with the specified test based on stored data specifying past usage of the current disposable punch (510), wherein the disposable punch is determined as being not compatible if it has been used with a test or reagent that will introduce unacceptable risk of cross-contamination;
if the previous use of the current disposable punch (510) is compatible with the specified test:
aligning the current disposable punch (510) with the sealed element (235), wherein the current disposable punch is not used to aspirate fluids;
punching an opening in the puncturable seal (305) on the sealed element (235) with the current disposable punch to enable a fluid-carrying tip of the immunodiagnostic testing apparatus to aspirate fluids therefrom or to dispense fluids therein without touching the puncturable seal (305); and
if the previous use of the current disposable punch (510) is not compatible with the specified test,
evaluating whether an alternative disposable punch from an array of disposable punches is compatible with the specified test and using the alternative disposable punch to punch the opening in the puncturable seal (305) if the alternative disposable punch is compatible with the specified test.

2. The method of claim 1, further comprising the step of replacing the current disposable punch if one or more conditions are met including whether
(i) a use of the current disposable punch exceeds a specified number of uses,
(ii) the time for using the current disposable punch causes a total usage time of the current disposable punch to exceed a time duration for which the current disposable punch is expected to be in use, and
(iii) the use of the current disposable punch will cause an increase in variability of control test results above a threshold.

3. The method of claim 2, further comprising the step of discarding the current disposable punch if the one or more conditions (i) to (iii) are met.

4. The method of claim 1, further comprising the step of loading a new disposable punch if none of the alternative disposable punches are compatible with the specified test.

5. The method of claim 1, further comprising the step of adjusting a configuration of disposable punch elements to position the compatible disposable punch for use with the element for the specified test.

6. The method of claim 1, wherein the element is selected from a test element, a plurality of chambers to provide a reagent, one or more chambers holding a sample, one or more chambers holding a reaction mix, a particular chamber in an gel card, a reagent holding vessel, a patient sample holding tube, bead cassette, a microtube, and a test tube.

7. The method of claim 6, wherein the disposable punch is held in a configuration of disposable punches, each disposable punch being associated with a type of sealed elements whose seals it has been used to puncture.

8. The method of claim 1, wherein said fluid-carrying tip is a disposable metering tip or a washable probe.

9. An immunodiagnostic test analyzer comprising:
a disposable punch (510) in a punch nest (515);
at least one set of elements (235), each element sealed with a puncturable seal (305), for holding at least one member of the group consisting of a reagent, a sample and a reaction mix;
a fluid-carrying tip;
a means for compatibility testing for determining if a current or an alternative disposable punch is compatible with a specified element from the set of elements,
wherein the disposable punch is determined as being not compatible if it has been used with a test or reagent that will introduce unacceptable risk of cross-contamination;
a means for aligning the disposable punch (510) with the specified element if the current disposable punch (510) is compatible with the specified test, or for aligning an alternative disposable punch from an array of disposable punches with the specified element if the current disposable punch (510) is not compatible with the specified test and the alternative disposable punch is compatible with the specified test; and
an actuator moveable with respect to the current or to the alternative disposable punch so as to align with the current or with the alternative disposable punch, the actuator configured to make the current or the alternative disposable punch an opening in the puncturable seal (305), which is sufficiently large to enable the fluid-carrying tip to aspirate or dispense fluids without touching the puncturable seal (305).

10. The immunodiagnostic test analyzer of claim 9, wherein said punch nest has a linear shape for moving the disposable punch along a straight linear path (250), or a has a circular shape for moving the disposable punch along a circular path (200), or wherein said punch nest moves the disposable punch along a closed path.

11. The immunodiagnostic test analyzer of claim 9, wherein said means for compatibility testing is configured to access stored data that is indicative of past usage of the current disposable punch.

12. The immunodiagnostic test analyzer of claim 9, wherein said means for aligning is configured to generate one or more instructions for moving the disposable punch over the specified element, or is configured to generate one or more instructions for aligning the actuator with the disposable punch.

13. The immunodiagnostic test analyzer of claim 9, further comprising a central processing unit configured to direct mechanical and sensory components basedon stored data about past usage of the disposable punch and about reagents and tests susceptible to cross contamination to determine whether the disposable punch is compatible with reuse.

## Patentansprüche

1. Verfahren zur Verringerung einer Kreuzkontamination in einer immundiagnostischen Testvorrichtung, umfassend die folgenden Schritte:
Schätzen einer Gebrauchszeit eines versiegelten Elements (235) mit einer punktierbaren Versiegelung (305) für eine Durchführung eines spezifizierten Tests unter Verwendung einer Software;
Bestimmen, ob eine vorhergehende Verwendung eines aktuellen Einweglochers (510) mit dem spezifizierten Test kompatibel ist, basierend auf gespeicherten Daten, welche eine frühere Verwendung des aktuellen Einweglochers (510) spezifizieren, wobei der Einweglocher als nicht kompatibel bestimmt wird, falls er mit einem Test oder Reagenz verwendet wurde, der bzw. das ein unzulässiges Risiko für eine Kreuzkontamination einführen wird;
falls die vorhergehende Verwendung des aktuellen Einweglochers (510) mit dem spezifizierten Test kompatibel ist:
Ausrichten des aktuellen Einweglochers (510) an dem versiegelten Element (235), wobei der aktuelle Einweglocher nicht zum Ansaugen von Fluiden verwendet wird;
Stanzen einer Öffnung in die punktierbare Versiegelung (305) auf dem versiegelten Element (235), mit dem aktuellen Einweglocher, um es einer fluidführenden Spitze der immundiagnostischen Testvorrichtung zu ermöglichen, Fluide daraus anzusaugen oder Fluide dorthinein abzugeben, ohne die punktierbare Versiegelung (305) zu berühren; und
falls die vorhergehende Verwendung des aktuellen Einweglochers (510) nicht mit dem spezifizierten Test kompatibel ist,
Bewerten, ob ein alternativer Einweglocher aus einer Anordnung von Einweglochern mit dem spezifizierten Test kompatibel ist, und Verwenden des alternativen aktuellen Einweglochers, um die Öffnung in die punktierbare Versiegelung (305) zu stanzen, falls der alternative Einweglocher mit dem spezifizierten Test kompatibel ist.

2. Verfahren nach Anspruch 1, ferner umfassend den Schritt des Ersetzens des aktuellen Einweglochers, falls eine oder mehrere Bedingungen erfüllt sind, einschließlich dessen, ob
(i) die Verwendung des aktuellen Einweglochers eine bestimmte Anzahl von Verwendungen überschreitet,
(ii) die Zeit, über die der aktuelle Einweglocher in Gebrauch war, verursacht, dass die Gesamtnutzungsdauer des aktuellen Einweglochers eine Zeitdauer überschreitet, über die erwartet wird, dass der Einweglocher verwendet wird, und
(iii) die Verwendung des aktuellen Einweglochers eine Erhöhung der Variabilität der Kontrolltestergebnisse über einen Schwellenwert veranlassen wird.

3. Verfahren nach Anspruch 2, ferner umfassend den Schritt des Verwerfens des aktuellen Einweglochers, falls die eine oder die mehreren Bedingungen (i) bis (iii) erfüllt sind.

4. Verfahren nach Anspruch 1, ferner umfassend den Schritt des Ladens eines neuen Einweglochers, falls keiner der alternativen Einweglocher mit dem spezifizierten Test kompatibel ist.

5. Verfahren nach Anspruch 1, ferner umfassend den Schritt des Einstellens einer Konfiguration von Einweglocherelementen, um den kompatiblen Einweglocher zur Verwendung mit dem Element für den spezifizierten Test zu positionieren.

6. Verfahren nach Anspruch 1, wobei das Element ausgewählt ist aus einem Testelement, mehreren Kammern, um ein Reagenz bereitzustellen, einer oder mehreren Kammern, die eine Probe enthalten, einer oder mehreren Kammern, die eine Reaktionsmischung enthalten, einer bestimmten Kammer in einer Gelkarte, einem Reagenzienhaltegefäß, einem Patientenproben-Halteröhrchen, einer Perlenkassette, einem Mikroröhrchen und einem Reagenzglas.

7. Verfahren nach Anspruch 6, wobei der Einweglocher in einer Konfiguration von Einweglochern gehalten wird, wobei jeder Einweglocher der Art von versiegelten Elementen zugeordnet ist, für deren Dichtungen er zum Durchstechen verwendet wurde.

8. Verfahren nach Anspruch 1, wobei die fluidleitende Spitze eine Einweg-Dosierspitze oder eine waschbare Sonde ist.

9. Immundiagnostischer Testanalysator, umfassend:
einen Einweglocher (510) in einem Lochernest (515);
mindestens einen Satz von Elementen (235), die mit einer punktierbaren Versiegelung (305) versiegelt sind, um mindestens ein Mitglied der Gruppe zu halten, die aus einem Reagenz, einer Probe und einem Reaktionsgemisch besteht;
eine fluidleitende Spitze;
Mittel zur Kompatibilitätsanalyse zur Bestimmung, ob der aktuelle Einweglocher oder ein alternativer Einweglocher mit einem bestimmten Element aus dem Satz von Elementen kompatibel ist, wobei der Einweglocher als nicht kompatibel beurteilt wird, falls er mit einem Test oder Reagenz verwendet wurde, das ein unzulässiges Risiko der Kreuzkontamination einführen wird;
Mittel zum Ausrichten des Einweglochers (510) an dem spezifizierten Element, falls der Einweglocher (510) mit dem spezifizierten Test kompatibel ist, oder zum Ausrichten eines alternativen Einweglochers aus einer Anordnung von Einweglochern an dem spezifizierten Element, falls der aktuelle Einweglocher (510) mit dem spezifizierten Test nicht kompatibel ist und der alternative Einweglocher mit dem spezifizierten Test kompatibel ist; und
einen Aktuator, welcher relativ zum aktuellen oder einem alternativen Einweglocher bewegbar ist, um sich an dem aktuellen oder dem alternativen Einweglocher auszurichten, wobei der Aktuator konfiguriert ist, damit der aktuelle oder der alternative Einweglocher eine Öffnung in die punktierbare Versiegelung (305) stanzt, welche ausreichend groß ist, um zu bewirken, dass die fluidführende Spitze Fluide ansaugen oder abgeben kann, ohne die punktierbare Versiegelung (305) zu berühren.

10. Immundiagnostischer Testanalysator nach Anspruch 9, wobei das Lochernest eine lineare Form aufweist, um den Einweglocher entlang eines geraden linearen Pfades (250) zu bewegen, oder eine Kreisform aufweist, um den Einweglocher entlang einer Kreisbahn (200) zu bewegen, oder wobei das Stanznest den Einweglocher entlang eines geschlossenen Pfades bewegt.

11. Immundiagnostischer Testanalysator nach Anspruch 9, wobei das Mittel zum Kompatibilitätstesten konfiguriert ist, um auf gespeicherte Daten zuzugreifen, welche frühere Verwendungen des aktuellen Einweglochers angeben.

12. Immundiagnostischer Testanalysator nach Anspruch 9, wobei das Mittel zum Ausrichten konfiguriert ist, um eine oder mehrere Anweisungen zum Bewegen des Einweglochers über das spezifizierte Element zu erzeugen oder konfiguriert ist, um eine oder mehrere Anweisungen zum Ausrichten des Aktuators an dem Einweglocher zu erzeugen.

13. Immundiagnostischer Testanalysator nach Anspruch 9, ferner umfassend eine zentrale Prozessoreinheit, welche konfiguriert ist, um mechanische und sensorische Komponenten zu steuern, basierend auf gespeicherten Daten bezüglich früherer Verwendungen des Einweglochers und Reagenzien und Tests, die ein Risiko der Kreuzkontamination innehaben, um zu bestimmen, ob der Einweglocher zur Wiederverwendung kompatibel ist.

## Revendications

1. Procédé destiné à la réduction de la contamination croisée dans un appareil d'essai immunodiagnostique, le procédé comprenant les étapes consistant à :
estimer un temps destiné à l'utilisation d'un élément étanche (235) comportant un joint perforable (305) dans l'exécution d'un essai spécifié, en utilisant un logiciel ;
déterminer si une utilisation précédente d'un poinçon jetable actuel (510) est compatible avec l'essai spécifié en fonction de données stockées spécifiant une utilisation intérieure du poinçon jetable actuel (510), dans lequel le poinçon jetable est déterminé comme n'étant pas compatible s'il a été utilisé avec un essai ou un réactif qui introduira un risque inacceptable de contamination croisée ;
si l'utilisation précédente du poinçon jetable actuel (510) est compatible avec l'essai spécifié :
aligner le poinçon jetable actuel (510) avec l'élément étanche (235), dans lequel le poinçon jetable actuel n'est pas utilisé pour aspirer des fluides ;
poinçonner une ouverture dans le joint perforable (305) sur l'élément étanche (235) avec le poinçon jetable actuel afin de permettre à un embout de transport de fluide de l'appareil d'essai immunodiagnostique d'aspirer des fluides à partir de celui-ci ou de distribuer des fluides dans celui-ci sans toucher le joint perforable (305) ; et
si l'utilisation précédente du poinçon jetable actuel (510) n'est pas compatible avec l'essai spécifié,
évaluer si un poinçon jetable alternatif provenant d'une matrice de poinçons jetables est compatible avec l'essai spécifié et utiliser le poinçon jetable alternatif afin de poinçonner l'ouverture dans le joint perforable (305) si le poinçon jetable alternatif est compatible avec l'essai spécifié.

2. Procédé selon la revendication 1, comprenant en outre l'étape de remplacement du poinçon jetable actuel si au moins une condition est remplie y compris si
(i) une utilisation du poinçon jetable actuel dépasse un nombre spécifié d'utilisations,
(ii) le temps destiné à l'utilisation du poinçon jetable actuel donne un temps d'utilisation total du poinçon jetable actuel qui dépasse une durée pendant laquelle le poinçon jetable actuel est censé être utilisé, et
(iii) l'utilisation du poinçon jetable actuel déclenchera une augmentation de variabilité des résultats d'essais de contrôle au-dessus d'un seuil.

3. Procédé selon la revendication 2, comprenant en outre l'étape de rejet du poinçon jetable actuel si au moins l'une des conditions (i) à (iii) est remplie.

4. Procédé selon la revendication 1, comprenant en outre l'étape de chargement d'un nouveau poinçon jetable si aucun poinçon jetable alternatif n'est compatible avec l'essai spécifié.

5. Procédé selon la revendication 1, comprenant en outre l'étape de réglage d'une configuration d'éléments de poinçon jetable afin de positionner le poinçon jetable compatible destiné à une utilisation avec l'élément pour l'essai spécifié.

6. Procédé selon la revendication 1, dans lequel l'élément est choisi parmi un élément d'essai, une pluralité de chambres pour fournir un réactif, au moins une chambre de maintien d'échantillon, au moins une chambre de maintien de mélange réactionnel, une chambre particulière dans une carte gel, une cuve de maintien de réactif, un tube de maintien d'échantillon de patient, une cassette à bille, un microtube, et un tube à essai.

7. Procédé selon la revendication 6, dans lequel le poinçon jetable est maintenu dans une configuration de poinçons jetables, chaque poinçon jetable étant associé à un type d'éléments étanches dont les joints ont été utilisés pour perforer.

8. Procédé selon la revendication 1, dans lequel ledit embout de transport de fluide est un embout de dosage jetable ou une sonde lavable.

9. Analyseur d'essai immunodiagnostique comprenant :
un poinçon jetable (510) dans un nid de poinçons (515) ;
au moins un ensemble d'éléments (235), chaque élément étant rendu étanche par un joint perforable (305), destiné au maintien d'au moins un élément du groupe constitué d'un réactif, d'un échantillon et d'un mélange réactionnel ;
un embout de transport de fluide ;
un moyen permettant l'essai de compatibilité permettant de déterminer si un poinçon jetable actuel ou alternatif est compatible avec un élément spécifié provenant de l'ensemble d'éléments,
dans lequel le poinçon jetable est déterminé comme n'étant pas compatible s'il a été utilisé avec un réactif qui introduira un risque inacceptable de contamination croisée ;
un moyen permettant d'aligner le poinçon jetable (510) avec l'élément spécifié si le poinçon jetable actuel (510) est compatible avec l'essai spécifié, ou permettant d'aligner un poinçon jetable alternatif provenant d'une matrice de poinçons jetables avec l'élément spécifié si le poinçon jetable actuel (510) n'est pas compatible avec l'essai spécifié et si le poinçon jetable alternatif est compatible avec l'essai spécifié ; et
un actionneur déplaçable par rapport au poinçon jetable actuel ou alternatif de manière à s'aligner avec le poinçon jetable actuel ou alternatif, l'actionneur étant conçu pour rendre le poinçon jetable actuel ou alternatif une ouverture dans le joint perforable (305), qui est suffisamment importante pour permettre à l'embout de transport de fluide d'aspirer ou de distribuer des fluides sans toucher le joint perforable (305).

10. Analyseur d'essai immunodiagnostique selon la revendication 9, dans lequel ledit nid de poinçons a une forme linéaire destinée à déplacer le poinçon jetable le long d'une voie linéaire droite (250), ou a une forme circulaire destinée à déplacer le poinçon jetable le long d'une voie circulaire (200), ou dans lequel ledit nid de poinçons déplace le poinçon jetable le long d'une voie fermée.

11. Analyseur d'essai immunodiagnostique selon la revendication 9, dans lequel ledit moyen permettant l'essai de compatibilité est conçu pour accéder à des données stockées qui indiquent une utilisation antérieure du poinçon jetable actuel.

12. Analyseur d'essai immunodiagnostique selon la revendication 9, dans lequel ledit moyen permettant l'alignement est conçu pour générer au moins une instruction permettant de déplacer le poinçon jetable sur l'élément spécifié, ou est conçu pour générer au moins une instruction permettant d'aligner l'actionneur avec le poinçon jetable.

13. Analyseur d'essai immunodiagnostique selon la revendication 9, comprenant en outre une unité de traitement central conçue pour diriger des composants mécaniques et sensoriels en fonction des données stockées concernant une utilisation antérieure du poinçon jetable et concernant des réactifs et des essais susceptibles de contamination croisée afin de déterminer si le poinçon jetable est compatible avec une réutilisation.
